# EUROPEAN PATENT APPLICATION

(11) **EP 3 584 490 A1**
(43) Date of publication of application: **25.12.2019**
(21) Application number: 18761994.5
(22) Date of filing: 07.05.2018
(51) Int. Cl.: F16M 11/06, H04N 5/232, F16M 11/04, G03B 17/56, F16M 11/20

(54) **CAMERA STABILIZER**

(30) Priority: 27.04.2018 CN 201810390808
(71) Applicant: Guangdong Sirui Optical Co., Ltd, Zhongshan, Guangdong 528458 (CN)
(72) Inventor: LI, Jie, Zhongshan Guangdong 528458 (CN); HUANG, Xiangyu, Zhongshan Guangdong 528458 (CN)
(74) Representative: Lavoix
(86) International application number: PCT/CN2018/085834
(87) International publication number: WO 2019/205184

(57) **Abstract**

The ball head provided by the present invention comprises a pedestal body having a mounting cavity; a switching structure having at least two connectors with different specs, wherein, the switching structure is mounted in the mounting cavity and is able to be rolled over; a selected one of the connectors extends out of the mounting cavity and is adapted to be connected to a photographing device after the switching structure is rolled over; and the pedestal body has a position-limiting structure for preventing the switching structure from being rolled over after the photographing device is connected with the selected connector. By providing the switching structure, when the ball head needs to be connected to photographing devices with different interfaces, a selected connector can be rolled over to extend out of the mounting cavity so as to be connected to a corresponding photographing device according to requirements. The present invention only needs to roll over the switching structure in order to switch between different connectors and thus be able to connect to photographing devices with different interfaces, which is easy and quick to operate, without the need to demount and mount the connectors, so that the connectors are not apt to be lost.

## Description

### Technical Field

The present invention pertains to the technical field of photographing equipment, and in particular relates to a ball head.

### Background

A ball head is a support device for mounting and fastening a photographing device (such as a camera). Usually, the ball head is mounted on a support bracket (normally a tripod), and then the photographing device is mounted on the ball head, so that the angle of the photographing device can be adjusted to get into a desired working posture.

Currently, most photographing devices (such as cameras, lenses) on the market are designed with a connection fastening interface of 3/8UNC screw nut or 1/4UNC screw nut, and the devices (such as ball heads, tripods) cooperating with them are also designed with a 3/8UNC screw bolt and a 1/4UNC screw bolt for matching the connection fastening interface. In the prior art, the aforementioned screw bolts with two different specs are usually supplied to consumers as accessories, so that the consumers can demount and mount the screw bolts on the device (such as a ball head or a tripod) according to the interface specs of their own camera or lens. This is very inconvenient to use, and the screw bolts in bulk with two different specs are apt to be lost.

### Summary of the Invention

Therefore, a technical problem to be solved by the present invention is how to overcome the defects in prior art that replacing the screw bolts with different specs for connecting a ball head and a lens requires mounting and demounting screw bolts in bulk and causes inconvenience in replacement and the screw bolts' tendency to go missing, by providing a ball head that does not require mounting and demounting screw bolts in bulk when replacing screw bolts with different specs for connecting to a lens, wherein the screw bolts are convenient to replace and not apt to be lost.

The present invention provides a ball head that comprises:
a pedestal body, having a mounting cavity;
a switching structure, having at least two connectors with different specs, wherein, the switching structure is mounted in the mounting cavity and is able to be rolled over, a selected one of the connectors extends out of the mounting cavity and is adapted to be connected to a photographing device after the switching structure is rolled over, and the pedestal body has a position-limiting structure for preventing the switching structure from being rolled over after the photographing device is connected with the selected connector.

The position-limiting structure is a position-limiting end face on the pedestal body, the mounting cavity is formed in the position-limiting end face, and the switching structure is prevented from being rolled over when the position-limiting end face abuts against a bottom of the photographing device.

The connectors are screw bolts.

The switching structure has two connectors, which are a 3/8UNC screw bolt and a 1/4UNC screw bolt respectively.

The switching structure is hinged in the mounting cavity.

The mounting cavity has position-limiting holes oppositely disposed on its cavity wall, and the switching structure also comprises:
a hinge shaft, with two ends of the hinge shaft respectively inserted in a corresponding position-limiting hole;
a rolling body, both sides of which respectively have the two connectors fixed thereon; the rolling body has a hinge hole for the hinge shaft to pass through so that the rolling body is able to rotate around the hinge shaft.

The hinge shaft has an outer diameter in an interference fit with a bore diameter of the position-limiting hole.

The pedestal body comprises:
a base, adapted for being connecting to a support bracket;
a fast-mounting plate assembly, mounted on the base; wherein, the mounting cavity is provided at one end of the fast-mounting plate assembly away from the base.

The fast-mounting plate assembly comprises:
a fast-mounting plate, comprising a plate body, and protruding arms extending from the plate body towards a direction away from the photographing device; wherein, the plate body has a first holding cavity, and a second holding cavity communicated with the first holding cavity is formed between the protruding arms and the plate body;
a fastening seat, comprising an embedding portion mounted in the first holding cavity, and provided with the mounting cavity;
a cover plate, provided in the second holding cavity, detachably connected on one side of the plate body away from the photographing device, and abutting against one side of the embedding portion away from the photographing device so as to prevent the embedding portion from slipping out of the first holding cavity towards the direction away from the photographing device.

One end of the first holding cavity adjacent to the photographing device has an outer diameter smaller than that of the other end of the first holding cavity away from the photographing device, an outer peripheral wall of the embedding portion has a shape that matches a cavity wall of the first holding cavity.

The fastening seat also comprises a protruding portion fixedly connected with the embedding portion and protruding into the second holding cavity; the ball head also comprises a regulating handle connected with the protruding portion for driving the protruding portion and the switching structure to rotate around an axis of the connector which extends out of the mounting cavity.

The regulating handle is hinged on the protruding portion, and the regulating handle has an unfolded state that the regulating handle is in a plane parallel to the axis of the connector, and a folded state that the regulating handle is in a plane perpendicular to the axis of the connector.

The base is a multi-dimension adjustable base for adjusting mounting angles of the photographing device on the ball head.

The multi-dimension adjustable base comprises at least two rotating seats that are rotatably connected to each other through a rotating shaft, and when the number of the rotating shafts is greater than one, the rotating shafts are arranged non-parallel to one another;
the ball head also comprises a first locking structure provided between every two adjacent rotating seats for locking the two adjacent rotating seats at an adjusted angle with respect to each other.

The first locking structure comprises:
a locking member, provided on one of the two adjacent rotating seats for locking the rotating shaft so as to prevent the two adjacent rotating seats from rotating relative to each other;
a locking handle, arranged to cooperate with the locking member to control the locking member to lock the rotating shaft or release the rotating shaft from being locked.

The first locking structure is provided to be rotatable around the rotating shaft;
the ball head also comprises a second locking structure for locking the first locking structure respectively when the first locking structure is rotated around the rotating shaft to cause the locking handle to stay in a vertical state and when the first locking structure is rotated around the rotating shaft to cause the locking handle to stay in a working state.

The second locking structure comprises:
an arc-shaped groove, provided on one end face of the rotating seat facing the locking member, and having a first location and a second location provided therein, wherein, the locking member is provided on the rotating seat;
a locating bore, provided on one end face of the locking member facing the arc-shaped groove;
an elastic member, mounted in the locating bore;
an adjusting member, abutting against one end of the elastic member and able to engage or disengage with the first location and the second location under an action of the elastic member, wherein, the adjusting member engages with the first location when the first locking structure is in a vertical state, and engages with the second location when the first locking structure is in a working state.

The first location and the second location are respectively a locking bore formed by indentation of a groove bottom of the arc-shaped groove.

One of the two rotating seats cooperating with each other is formed with a through hole, and the other one is provided with the rotating shaft that is adapted to pass through the through hole; the locking member is rotatably connected with the cooperating rotating seat having the through hole, and the locking member is provided with a mounting hole for sleeving on the rotating shaft.

The locking member also comprises an open bush sleeved on the rotating shaft and provided inside the mounting hole, and a first adjustable arm and a second adjustable arm respectively extend outward from both sides of an opening notch of the open bush;
the first locking structure also comprises a shaft rod connecting the locking member and the locking handle; the locking member is provided with a screw-threaded connecting bore, a corresponding end of the shaft rod is provided with an outer screw-threaded structure for engaging with the screw-threaded connecting bore; when the shaft rod is screwed into the screw-threaded connecting bore, the shaft rod pushes the first adjustable arm to move towards the second adjustable arm so as to narrow the opening notch; and when the shaft rod is screwed out of the screw-threaded connecting bore, the shaft rod causes the first adjustable arm to move away from the second adjustable arm so as to widen the opening notch.

The ball head further comprises an elastic bushing, provided between the rotating shaft and the open bush, and arranged to lock and tighten the rotating shaft when the opening notch of the open bush is narrowed.

The technical scheme of the present invention has the following advantages:
1. The ball head provided by the present invention comprises a pedestal body, having a mounting cavity; a switching structure, having at least two connectors with different specs; wherein, the switching structure is mounted in the mounting cavity and is able to be rolled over, a selected one of the connectors extends out of the mounting cavity and is adapted to be connected to a photographing device after the switching structure is rolled over, and the pedestal body has a position-limiting structure for preventing the switching structure from being rolled over after the photographing device is connected with the selected connector. By providing the switching structure, when the ball head needs to be connected to photographing devices with different interfaces, a selected connector can be rolled over to extend out of the mounting cavity so as to be connected to a corresponding photographing device according to requirements. The present invention only needs to roll over the switching structure in order to switch between different connectors and thus be able to connect to photographing devices with different interfaces, which is easy and quick to operate, without the need to demount and mount the connectors, so that the connectors are not apt to be lost.
2. In the ball head provided by the present invention, the mounting cavity has position-limiting holes oppositely disposed on its cavity wall, and the switching structure also comprises: a hinge shaft, with two ends of the hinge shaft respectively inserted in a corresponding position-limiting hole; a rolling body, both sides of which respectively have the two connectors fixed thereon; the rolling body has a hinge hole for the hinge shaft to pass through so that the rolling body is able to rotate around the hinge shaft. By providing the two connectors on the two sides of the rolling body and providing a hinge hole in the rolling body, it only needs to rotate the rolling body around the hinge shaft to realize switching between the two connectors, which has a simple structure and is convenient to operate.
3. In the ball head provided by the present invention, the fast-mounting plate assembly comprises: a fast-mounting plate, comprising a plate body, and protruding arms extending from the plate body towards a direction away from the photographing device; wherein, the plate body has a first holding cavity, and a second holding cavity communicated with the first holding cavity is formed between the protruding arms and the plate body; a fastening seat, comprising an embedding portion mounted in the first holding cavity, and provided with the mounting cavity; a cover plate, provided in the second holding cavity, detachably connected on one side of the plate body away from the photographing device, and abutting against one side of the embedding portion away from the photographing device so as to prevent the embedding portion from slipping out of the first holding cavity towards the direction away from the photographing device. By providing the mounting cavity in the fastening seat, and with the cooperation of the fast-mounting plate and the cover plate, the fastening seat having the mounting cavity can be firmly mounted on the fast-mounting plate, so that the switching structure in the mounting cavity can be mounted more stably.
4. In the ball head provided by the present invention, the fastening seat also comprises a protruding portion fixedly connected with the embedding portion and protruding into the second holding cavity; the ball head also comprises a regulating handle connected with the protruding portion for driving the protruding portion and the switching structure to rotate around an axis of the connector which extends out of the mounting cavity. When the connector needs to be connected with a photographing device, the regulating handle can be rotated to realize the screw-threaded mounting between the connector and the interface of the photographing device, so that the connection operation between the ball head and the photographing device is more convenient.
5. In the ball head provided by the present invention, the regulating handle is hinged on the protruding portion, and the regulating handle has an unfolded state that the regulating handle is in a plane parallel to the axis of the connector, and a folded state that the regulating handle is in a plane perpendicular to the axis of the connector. When the regulating handle needs to be used, the regulating handle can be set in an unfolded state; and when the regulating handle does not need to be used, the regulating handle can be set in a folded state for easy storage.
6. In the ball head provided by the present invention, the first locking structure is provided to be rotatable around the rotating shaft; the ball head also comprises a second locking structure for locking the first locking structure respectively when the first locking structure is rotated around the rotating shaft to cause the locking handle to stay in a vertical state and when the first locking structure is rotated around the rotating shaft to cause the locking handle to stay in a working state. By providing the second locking structure, the locking handle can be switched between and locked in the two states of the vertical state and the working state, thereby making the locking handle easy to use and also easy to fold when not being used, so that less space is occupied by the ball head.
7. In the ball head provided by the present invention, the second locking structure comprises: an arc-shaped groove, provided on one end face of the rotating seat facing the locking member, and having a first location and a second location provided therein, wherein, the locking member is provided on the rotating seat; a locating bore, provided on one end face of the locking member facing the arc-shaped groove; an elastic member, mounted in the locating bore; an adjusting member, abutting against one end of the elastic member and able to engage or disengage with the first location and the second location under an action of the elastic member, wherein, the adjusting member engages with the first location when the first locking structure is in a vertical state, and engages with the second location when the first locking structure is in a working state. By switching the adjusting member between the first location and the second location, it can be realized that the locking handle is switched between the vertical state and the working state, this configuration for realizing state switching of the locking handle has a simple structure and is convenient to operate.
8. In the ball head provided by the present invention, the locking member also comprises an open bush sleeved on the rotating shaft and provided inside the mounting hole, and a first adjustable arm and a second adjustable arm respectively extend outward from both sides of an opening notch of the open bush; the first locking structure also comprises a shaft rod connecting the locking member and the locking handle; the locking member is provided with a screw-threaded connecting bore, a corresponding end of the shaft rod is provided with an outer screw-threaded structure for engaging with the screw-threaded connecting bore; when the shaft rod is screwed into the screw-threaded connecting bore, the shaft rod pushes the first adjustable arm to move towards the second adjustable arm so as to narrow the opening notch; and when the shaft rod is screwed out of the screw-threaded connecting bore, the shaft rod causes the first adjustable arm to move away from the second adjustable arm so as to widen the opening notch. By rotating the shaft rod, the opening notch of the open bush can be adjusted, thereby making the open bush rotatable around the shaft rod or clamped on the shaft rod, so that angle adjustment between the rotating seats and state switching of the locking handle can be realized when the open bush is rotatable around the shaft rod, and the adjusted angle or state can be locked when the open bush is clamped on the shaft rod.

### Brief Description of the Drawings

In order to more clearly describe the technical schemes in the specific embodiments of the present invention or in the prior art, hereinafter, the accompanying drawings to be used in the description of the specific embodiments or the prior art will be briefly introduced. Apparently, the drawings described below show some of the embodiments of present invention, and for those skilled in the art, without expenditure of creative labor, other drawings can be derived on the basis of these accompanying drawings.
FIG. 1 is a stereogram of a ball head provided in a first embodiment of the present invention;
FIG. 2 is a stereogram of the switching structure mounted on the fast-mounting plate assembly of the ball head shown in FIG. 1;
FIG. 3 is a top view of the switching structure mounted on the fast-mounting plate assembly of the ball head shown in FIG. 2;
FIG. 4 is a sectional view of the switching structure mounted on the fast-mounting plate assembly of the ball head shown in FIG. 2;
FIG. 5 is an exploded view of the switching structure mounted on the fast-mounting plate assembly of the ball head shown in FIG. 2;
FIG. 6 is a stereogram of the switching structure mounted on the fastening seat of the ball head shown in FIG. 1;
FIG. 7 is a partial exploded view of the ball head shown in FIG. 1;
FIG. 8 is a stereogram of the first locking structure being separated from other components of the ball head shown in FIG. 1;
FIG. 9 is a partial sectional view of the ball head shown in FIG. 1;
FIG. 10 is a stereogram of the locking handle in a vertical state in the ball head shown in FIG. 1.

### Reference signs:

1-mounting cavity, 11-position-limiting hole, 21-connector, 22-hinge shaft, 23-rolling body, 24-position-limiting end face, 31-rotating seat, 32-rotating shaft, 4-fast-mounting plate assembly, 41-fast-mounting plate, 411-plate body, 412-protruding arm, 413-first holding cavity, 414-second holding cavity, 42-fastening seat, 421-embedding portion, 422-protruding portion, 43-cover plate, 5-regulating handle, 61-locking member, 611-open bush, 612-first adjustable arm, 613-second adjustable arm, 62-locking handle, 63-shaft rod, 71-arc-shaped groove, 711-first location, 712-second location, 72-elastic member, 73-adjusting member, 8-elastic bushing.

### Detailed Description of Embodiments

A clear and complete description of the technical schemes of the present invention is given below, in conjunction with the accompanying drawings. Apparently, the described embodiments are a part, but not all, of the embodiments of the present invention. All the other embodiments, derived by a person skilled in the art on the basis of the embodiments described in the present invention without expenditure of creative labor, are included in the protection scope of the present invention.

Furthermore, the technical features involved in the various embodiments of the present invention described below can be combined with one another as long as they do not conflict with one another.

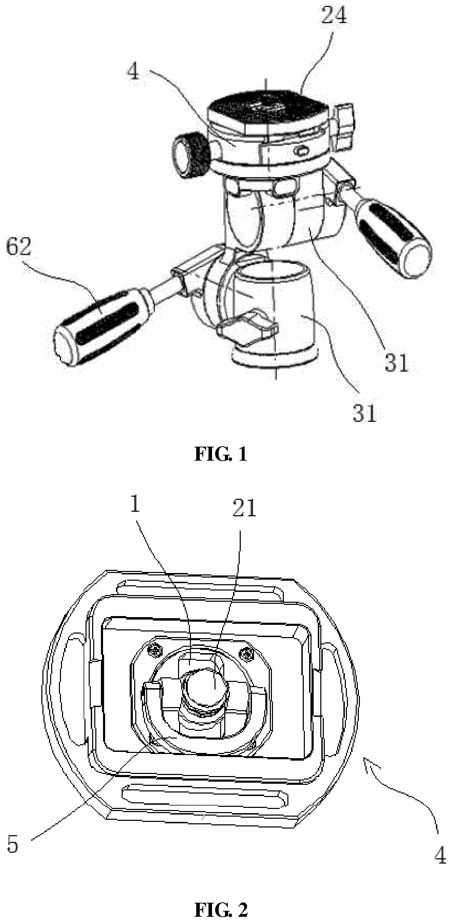

As shown in FIG. 1 to FIG. 4, the present embodiment provides a ball head that comprises a pedestal body and a switching structure.

The pedestal body is provided with a mounting cavity 1.

The switching structure has two connectors 21 with different specs; the switching structure is mounted in the mounting cavity 1 and is able to be rolled over, a selected one of the connectors 21 extends out of the mounting cavity 1 and is adapted to be connected to a photographing device (such as a camera) after the switching structure is rolled over, and the pedestal body has a position-limiting structure for preventing the switching structure from being rolled over after the photographing device is connected with the selected connector 21. As variable embodiments, the switching structure may also have three or four or more connectors 21 with different specs.

The position-limiting structure is a position-limiting end face 24 on the pedestal body, the mounting cavity 1 is formed in the position-limiting end face 24, and the switching structure is prevented from being rolled over when the position-limiting end face 24 abuts against a bottom of the photographing device.

In this embodiment, the connectors are screw bolts, which are a 3/8UNC screw bolt and a 1/4UNC screw bolt respectively.

The switching structure may have various specific mounting configurations. In this embodiment, the switching structure is hinged in the mounting cavity 1; the mounting cavity 1 has position-limiting holes 11 oppositely disposed on its cavity wall, and the switching structure also comprises a hinge shaft 22 and a rolling body 23. Two ends of the hinge shaft 22 are respectively inserted in a corresponding position-limiting hole 11; both sides of the rolling body 23 respectively have the two connectors 21 fixed thereon; the rolling body 23 has a hinge hole for the hinge shaft 22 to pass through so that the rolling body 23 is able to rotate around the hinge shaft 22. By providing the two connectors 21 on the two sides of the rolling body 23 and providing a hinge hole in the rolling body 23, it only needs rotating the rolling body 23 around the hinge shaft 22 to realize switching between the two connectors 21, which has a simple structure and is convenient to operate.

In order to prevent the hinge shaft 22 from rotating together with the rolling body 23, in this embodiment, the hinge shaft 22 has an outer diameter in an interference fit with a bore diameter of the position-limiting hole 11.

The pedestal body comprises a base and a fast-mounting plate assembly 4.

The base is adapted for being connecting to a support bracket.

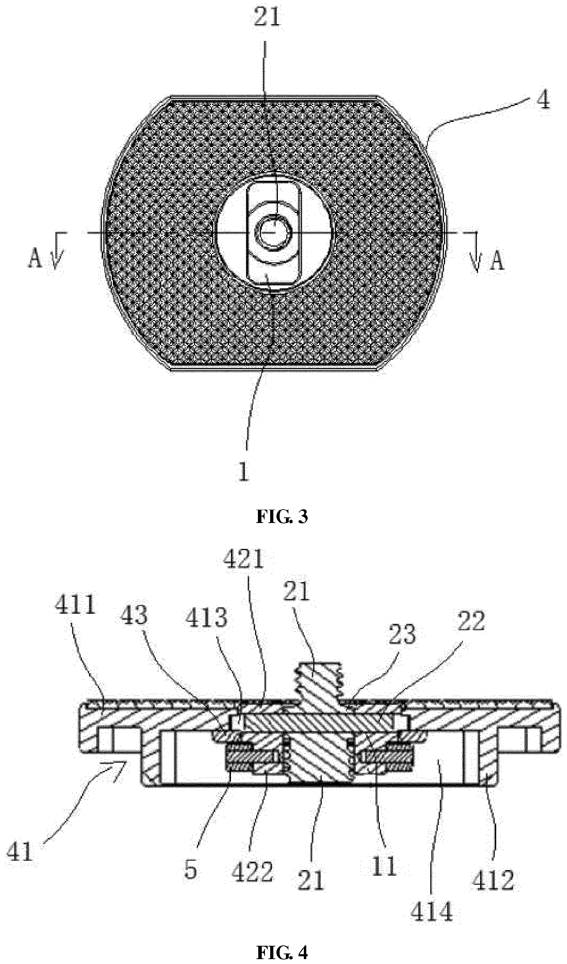

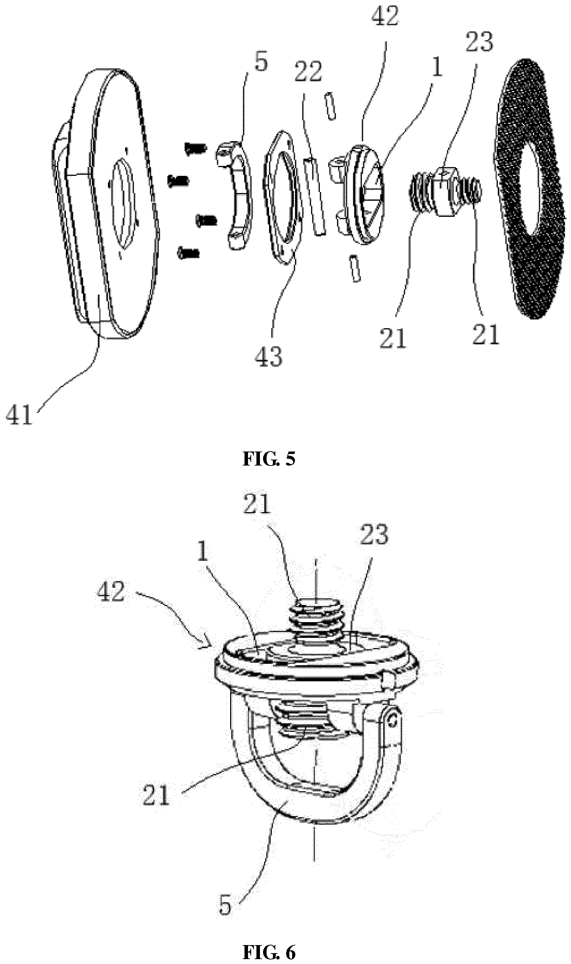

As shown in FIG. 4 to FIG. 6, the fast-mounting plate assembly 4 is mounted on the base, and the mounting cavity 1 is provided at one end of the fast-mounting plate assembly 4 away from the base. The fast-mounting plate assembly 4 comprises a fast-mounting plate 41, a fastening seat 42 and a cover plate 43.

The fast-mounting plate 41 comprises a plate body 411 and protruding arms 412 extending from the plate body 411 towards a direction away from the photographing device; wherein, the plate body 411 has a first holding cavity 413, and a second holding cavity 414 communicated with the first holding cavity 413 is formed between the protruding arms 412 and the plate body 411.

The fastening seat 42 comprises an embedding portion 421 mounted in the first holding cavity 413, and is provided with the mounting cavity 1.

The cover plate 43 is provided in the second holding cavity 414, detachably connected on one side of the plate body 411 away from the photographing device, and abutting against one side of the embedding portion 421 away from the photographing device so as to prevent the embedding portion 421 from slipping out of the first holding cavity 413 towards the direction away from the photographing device.

By providing the mounting cavity 1 in the fastening seat 42, and with the cooperation of the fast-mounting plate 41 and the cover plate 43, the fastening seat 42 having the mounting cavity 1 can be firmly mounted on the fast-mounting plate 41, so that the switching structure in the mounting cavity 1 is more stably mounted.

One end of the first holding cavity 413 adjacent to the photographing device has an outer diameter smaller than that of the other end of the first holding cavity 413 away from the photographing device, an outer peripheral wall of the embedding portion 421 has a shape that matches a cavity wall of the first holding cavity 413.

In order to make the connection operation between the ball head and the photographing device more convenient, in this embodiment, the fastening seat 42 also comprises a protruding portion 422 fixedly connected with the embedding portion 421 and protruding into the second holding cavity 414; the ball head also comprises a regulating handle 5 connected with the protruding portion 422 for driving the protruding portion 422 and the switching structure to rotate around an axis of the connector 21 which extends out of the mounting cavity 1. When the connector 21 needs to be connected with a photographing device, the regulating handle 5 can be rotated to realize the screw-threaded mounting between the connector 21 and the interface of the photographing device, so that the connection operation between the ball head and the photographing device is more convenient.

In this embodiment, the regulating handle 5 is hinged on the protruding portion 422, and the regulating handle 5 has an unfolded state that the regulating handle 5 is in a plane parallel to the axis of the connector 21, and a folded state that the regulating handle 5 is in a plane perpendicular to the axis of the connector 21. When the regulating handle 5 needs to be used, the regulating handle 5 can be set in the unfolded state; and when the regulating handle 5 does not need to be used, the regulating handle 5 can be set in the folded state to facilitate folding. There may be various ways to switch between the two states of the regulating handle 5, for example by providing a locking structure. In this embodiment, the hinged connection between the regulating handle 5 and the protruding portion 422 is configured to be in an interference fit, so that the state of the regulating handle 5 can be locked in real time.

Referring to FIG. 1, the base in this embodiment is a multi-dimension adjustable base for adjusting mounting angles of the photographing device on the ball head. The multi-dimension adjustable base comprises at least two rotating seats 31 that are rotatably connected to each other through a rotating shaft 32, and when the number of the rotating shafts 32 is greater than one, the rotating shafts 32 are arranged non-parallel to one another. Specifically, in this embodiment, the multi-dimension adjustable base comprises three rotating seats 31 that are rotatably connected to each other through rotating shafts 32, and the rotating shafts 32 are arranged non-parallel to one another, wherein one rotating shaft 32 adjacent to the support bracket is connected with the support bracket. As variable embodiments, the multi-dimension adjustable base may also comprises two or four or more rotating seats 31.

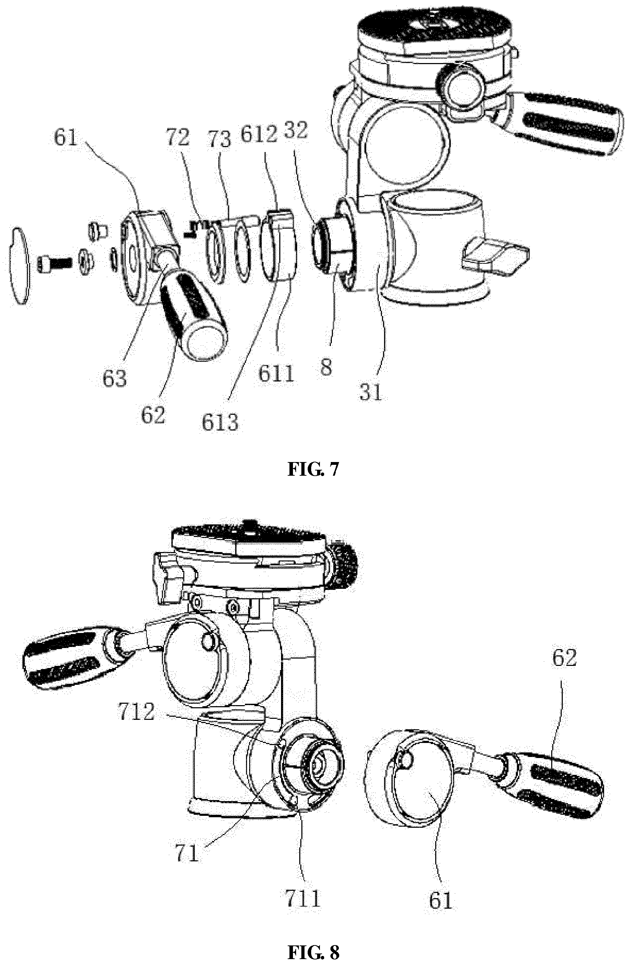

As shown in FIG. 7 to FIG. 9, the ball head in this embodiment also comprises a first locking structure which is rotatable around the rotating shaft 32 and is provided between every two adjacent rotating seats 31 for locking the two adjacent rotating seats 31 at an adjusted angle with respect to each other. The first locking structure comprises a locking member 61 and a locking handle 62.

The locking member 61 is provided on one of the two adjacent rotating seats 31 for locking the rotating shaft 32 so as to prevent the two adjacent rotating seats 31 from rotating relative to each other.

The locking handle 62 is arranged to cooperate with the locking member 61 to control the locking member 61 to lock the rotating shaft 32 or release the rotating shaft 32 from being locked.

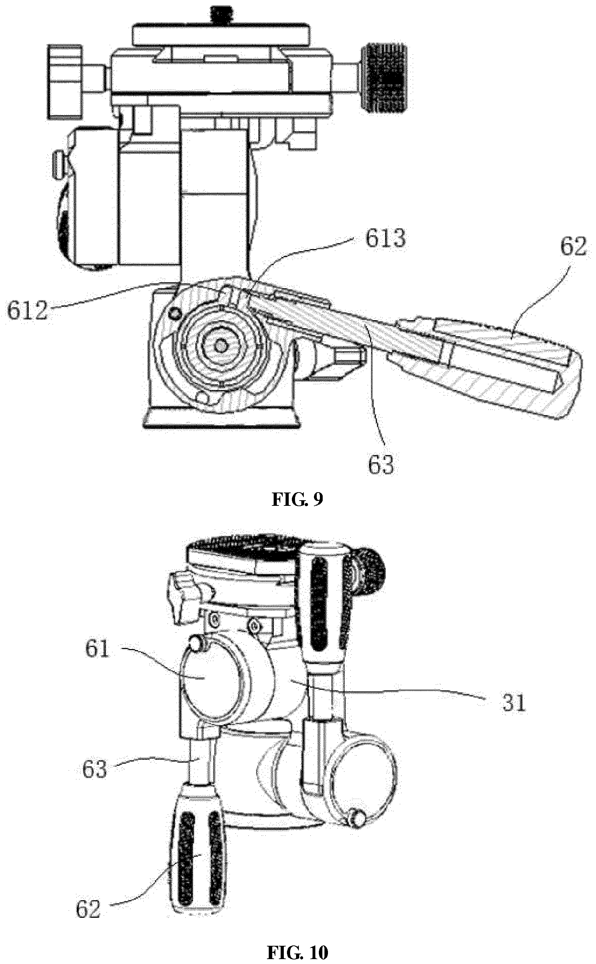

Referring to FIG. 10, the ball head in this embodiment also comprises a second locking structure for locking the first locking structure respectively when the first locking structure is rotated around the rotating shaft 32 to cause the locking handle 62 to stay in a vertical state and when the first locking structure is rotated around the rotating shaft 32 to cause the locking handle 62 to stay in a working state. By providing the second locking structure, the locking handle 62 can be switched between and locked at the two states of the vertical state and the working state, thereby making the locking handle 62 easy to use and also easy to fold when not being used, so that less space is occupied by the ball head. As a variable embodiment, the second locking structure may not be provided.

The second locking structure may have various specific structural configurations. In this embodiment, the second locking structure comprises an arc-shaped groove 71, a locating bore, an elastic member 72 and an adjusting member 73.

The arc-shaped groove 71 is provided on one end face of the rotating seat 31 facing the locking member 61, and having a first location 711 and a second location 712 provided therein, wherein, the locking member 61 is provided on the rotating seat 31.

The locating bore is provided on one end face of the locking member 61 facing the arc-shaped groove 71.

The elastic member 72 mounted in the locating bore.

The adjusting member 73 abuts against one end of the elastic member 72 and able to engage or disengage with the first location 711 and the second location 712 under an action of the elastic member 72, wherein, the adjusting member 73 engages with the first location 711 when the first locking structure is in a vertical state and engages with the second location 712 when the first locking structure is in a working state.

By switching the adjusting member 73 between the first location 711 and the second location 712, it can be realized that the locking handle 62 is switched between the vertical state and the working state, this configuration for realizing state switching of the locking handle 62 has a simple structure and is convenient to operate.

In this embodiment, the first location 711 and the second location 712 are respectively a locking bore formed by indentation of a groove bottom of the arc-shaped groove 71.

One of the two rotating seats 31 cooperating with each other is formed with a through hole, and the other one is provided with the rotating shaft 32 that is adapted to pass through the through hole; the locking member 61 is rotatably connected with the cooperating rotating seat 31 having the through hole, and the locking member 61 is provided with a mounting hole for sleeving on the rotating shaft 32.

The locking member 61 also comprises an open bush 611 sleeved on the rotating shaft 32 and provided inside the mounting hole, and a first adjustable arm 612 and a second adjustable arm 613 respectively extend outward from both sides of an opening notch of the open bush.

The first locking structure also comprises a shaft rod 63 connecting the locking member 61 and the locking handle 62; the locking member 61 is provided with a screw-threaded connecting bore, a corresponding end of the shaft rod 63 is provided with an outer screw-threaded structure for engaging with the screw-threaded connecting bore; when the shaft rod 63 is screwed into the screw-threaded connecting bore, the shaft rod 63 pushes the first adjustable arm 612 to move towards the second adjustable arm 613 so as to narrow the opening notch; and when the shaft rod 63 is screwed out of the screw-threaded connecting bore, the shaft rod 63 causes the first adjustable arm 612 to move away from the second adjustable arm 613 so as to widen the opening notch.

By rotating the shaft rod 63, the opening notch of the open bush 611 can be adjusted, thereby making the open bush 611 rotatable around the shaft rod 32 or clamped on the shaft rod 32, so that angle adjustment between the rotating seats 31 and state switching of the locking handle 62 can be realized when the open bush 611 is rotatable around the shaft rod, and the adjusted angle or state can be locked when the open bush 611 is clamped on the shaft rod 32.

The ball head of the present invention also comprises an elastic bushing 8 provided between the rotating shaft 32 and the open bush 611, and the elastic bushing 8 locks and tightens the rotating shaft 32 when the opening notch of the open bush 611 is narrowed. As a variable embodiment, the elastic bushing 8 may not be provided.

By means of the ball head of the present embodiment, when the photographing device to be mounted has an interface corresponding to a 3/8UNC screw bolt connector, the user can push down the 1/4UNC screw bolt connector to make the rolling body 23 rotate around the hinge shaft 22 in the mounting cavity 1, so that the 1/4UNC screw bolt connector extends into the mounting cavity 1 and the 3/8UNC screw bolt connector is rolled over to extend out of the mounting cavity 1; when the photographing device to be mounted has an interface corresponding to a 1/4UNC screw bolt connector, likewise, the user can push down the 3/8UNC screw bolt connector to make the rolling body 23 rotate around the hinge shaft 22 in the mounting cavity 1, so that the 3/8UNC screw bolt connector extends into the mounting cavity 1 and the 1/4UNC screw bolt connector is rolled over to extend out of the mounting cavity 1. In such a way, a desired connector 21 can be rolled over to extend out of the mounting cavity 1 so as to be connected with the corresponding photographing device according to actual needs. The present invention only needs to roll over the switching structure in order to switch between different connectors 21 and thus be able to connect to photographing devices with different interfaces, which is easy and quick to operate, without the need to demount and mount the connectors 21, so that the connectors 21 are not apt to be lost.

Apparently, the aforementioned embodiments are merely examples illustrated for clearly describing the present invention, rather than limiting the implementation ways thereof. For a person skilled in the art, various changes and modifications in other different forms can be made on the basis of the aforementioned description. It is unnecessary and impossible to exhaustively list all the implementation ways herein. However, any obvious changes or modifications derived from the aforementioned description are intended to be embraced within the protection scope of the present invention.

## Claims

1. A ball head, **characterized in** comprising:
a pedestal body, having a mounting cavity (1);
a switching structure, having at least two connectors (21) with different specs,
wherein, the switching structure is mounted in the mounting cavity (1) and is able to be rolled over; a selected one of the connectors (21) extends out of the mounting cavity (1) and is adapted to be connected to a photographing device after the switching structure is rolled over; and the pedestal body has a position-limiting structure for preventing the switching structure from being rolled over after the photographing device is connected with the selected connector (21).

2. The ball head according to Claim 1, **characterized in that**,
the position-limiting structure is a position-limiting end face (24) on the pedestal body, the mounting cavity (1) is formed in the position-limiting end face (24), and the switching structure is prevented from being rolled over when the position-limiting end face (24) abuts against a bottom of the photographing device.

3. The ball head according to Claim 1 or 2, **characterized in that**, the connectors (21) are screw bolts.

4. The ball head according to Claim 3, **characterized in that**, the switching structure has two connectors (21), which are a 3/8UNC screw bolt and a 1/4UNC screw bolt respectively.

5. The ball head according to any one of Claims 1-4, **characterized in that**, the switching structure is hinged in the mounting cavity (1).

6. The ball head according to Claim 5, **characterized in that**,
the mounting cavity (1) has position-limiting holes (11) oppositely disposed on its cavity wall, and
the switching structure also comprises:
a hinge shaft (22), with two ends of the hinge shaft (22) respectively inserted in a corresponding position-limiting hole (11);
a rolling body (23), both sides of which respectively have the two connectors (21) fixed thereon; the rolling body (23) has a hinge hole for the hinge shaft (22) to pass through so that the rolling body (23) is able to rotate around the hinge shaft (22).

7. The ball head according to Claim 6, **characterized in that**, the hinge shaft (22) has an outer diameter in an interference fit with a bore diameter of the position-limiting hole (11).

8. The ball head according to any one of Claims 1-7, **characterized in that**, the pedestal body comprises:
a base, adapted for being connecting to a support bracket;
a fast-mounting plate assembly (4), mounted on the base;
wherein, the mounting cavity (1) is provided at one end of the fast-mounting plate assembly (4) away from the base.

9. The ball head according to Claim 8, **characterized in that**, the fast-mounting plate assembly (4) comprises:
a fast-mounting plate (41), comprising a plate body (411), and protruding arms (412) extending from the plate body (411) towards a direction away from the photographing device; wherein, the plate body (411) has a first holding cavity (413), and a second holding cavity (414) communicated with the first holding cavity (413) is formed between the protruding arms (412) and the plate body (411);
a fastening seat (42), comprising an embedding portion (421) mounted in the first holding cavity (413), and provided with the mounting cavity (1);
a cover plate (43), provided in the second holding cavity (414), detachably connected on one side of the plate body (411) away from the photographing device, and abutting against one side of the embedding portion (421) away from the photographing device so as to prevent the embedding portion (421) from slipping out of the first holding cavity (413) towards the direction away from the photographing device.

10. The ball head according to Claim 9, **characterized in that**, one end of the first holding cavity (413) adjacent to the photographing device has an outer diameter smaller than that of the other end of the first holding cavity (413) away from the photographing device, an outer peripheral wall of the embedding portion (421) has a shape that matches a cavity wall of the first holding cavity (413).

11. The ball head according to Claim 9 or 10, **characterized in that**,
the fastening seat (42) also comprises a protruding portion (422) fixedly connected with the embedding portion (421) and protruding into the second holding cavity (414);
the ball head also comprises a regulating handle (5) connected with the protruding portion (422) for driving the protruding portion (422) and the switching structure to rotate around an axis of the connector (21) which extends out of the mounting cavity (1).

12. The ball head according to Claim 11, **characterized in that**, the regulating handle (5) is hinged on the protruding portion (422), and the regulating handle (5) has an unfolded state that the regulating handle (5) is in a plane parallel to the axis of the connector (21), and a folded state that the regulating handle (5) is in a plane perpendicular to the axis of the connector (21).

13. The ball head according to any one of Claims 8-12, **characterized in that**, the base is a multi-dimension adjustable base for adjusting mounting angles of the photographing device on the ball head.

14. The ball head according to Claim 13, **characterized in that**,
the multi-dimension adjustable base comprises at least two rotating seats (31) that are rotatably connected to each other through a rotating shaft (32), and when the number of the rotating shafts (32) is greater than one, the rotating shafts (32) are arranged non-parallel to one another;
the ball head also comprises a first locking structure provided between every two adjacent rotating seats (31) for locking the two adjacent rotating seats (31) at an adjusted angle with respect to each other.

15. The ball head according to Claim 14, **characterized in that**, the first locking structure comprises:
a locking member (61), provided on one of the two adjacent rotating seats (31) for locking the rotating shaft (32) so as to prevent the two adjacent rotating seats (31) from rotating relative to each other;
a locking handle (62), arranged to cooperate with the locking member (61) to control the locking member (61) to lock the rotating shaft (32) or release the rotating shaft (32) from being locked.

16. The ball head according to Claim 15, **characterized in that**,
the first locking structure is provided to be rotatable around the rotating shaft (32);
the ball head also comprises a second locking structure for locking the first locking structure respectively when the first locking structure is rotated around the rotating shaft (32) to cause the locking handle (62) to stay in a vertical state and when the first locking structure is rotated around the rotating shaft (32) to cause the locking handle (62) to stay in a working state.

17. The ball head according to Claim 16, **characterized in that**, the second locking structure comprises:
an arc-shaped groove (71), provided on one end face of the rotating seat (31) facing the locking member (61), and having a first location (711) and a second location (712) provided therein, wherein, the locking member (61) is provided on the rotating seat (31);
a locating bore, provided on one end face of the locking member (61) facing the arc-shaped groove (71);
an elastic member (72), mounted in the locating bore;
an adjusting member (73), abutting against one end of the elastic member (72) and able to engage or disengage with the first location (711) and the second location (712) under an action of the elastic member (72), wherein, the adjusting member (73) engages with the first location (711) when the first locking structure is in a vertical state, and engages with the second location (712) when the first locking structure is in a working state.

18. The ball head according to Claim 17, **characterized in that**, the first location (711) and the second location (712) are respectively a locking bore formed by indentation of a groove bottom of the arc-shaped groove (71).

19. The ball head according to any one of Claims 14-18, **characterized in that**, one of the two rotating seats (31) cooperating with each other is formed with a through hole, and the other one is provided with the rotating shaft (32) that is adapted to pass through the through hole; the locking member (61) is rotatably connected with the cooperating rotating seat (31) having the through hole, and the locking member (61) is provided with a mounting hole for sleeving on the rotating shaft (32).

20. The ball head according to Claim 19, **characterized in that**,
the locking member (61) also comprises an open bush (611) sleeved on the rotating shaft (32) and provided inside the mounting hole, and a first adjustable arm (612) and a second adjustable arm (613) respectively extend outward from both sides of an opening notch of the open bush (611);
the first locking structure also comprises a shaft rod (63) connecting the locking member (61) and the locking handle (62); the locking member (61) is provided with a screw-threaded connecting bore, a corresponding end of the shaft rod (63) is provided with an outer screw-threaded structure for engaging with the screw-threaded connecting bore; when the shaft rod (63) is screwed into the screw-threaded connecting bore, the shaft rod (63) pushes the first adjustable arm (612) to move towards the second adjustable arm (613) so as to narrow the opening notch; and when the shaft rod (63) is screwed out of the screw-threaded connecting bore, the shaft rod (63) causes the first adjustable arm (612) to move away from the second adjustable arm (613) so as to widen the opening notch.

21. The ball head according to Claim 20, **characterized in** further comprising an elastic bushing (8), provided between the rotating shaft (32) and the open bush (611), and arranged to lock and tighten the rotating shaft (32) when the opening notch of the open bush (611) is narrowed.
